# EUROPEAN PATENT APPLICATION

(11) **EP 4 782 868 A2**
(43) Date of publication of application: **29.07.2026**
(21) Application number: 26184956.6
(22) Date of filing: 10.01.2022
(51) Int. Cl.: G01S 5/00

(54) **METHODS AND APPARATUS FOR SUPPORTING POSITIONING INTEGRITY IN WIRELESS COMMUNICATION SYSTEMS**

(30) Priority: 12.01.2021 US 202163136392 P; 02.08.2021 US 202163228372 P
(62) Divisional of application: 22706137.1
(71) Applicant: InterDigital Patent Holdings, Inc., Wilmington, DE 19809 (US)
(72) Inventor: RAO, Jaya, MONTREAL, H3A 0H4 (CA); HASEGAWA, Fumihiro, WESTMOUNT, H3Z 2K5 (CA); HOANG, Tuong, MONTREAL, H2K 3C3 (CA); LEE, Moon IL, MELVILLE, 11747 (US); PELLETIER, Ghyslain, MONTREAL, H1X 3P2 (CA); MARINIER, Paul, BROSSARD, J4X 2J7 (CA)
(74) Representative: Interdigital

(57) **Abstract**

The disclosure pertains to methods and apparatus for supporting geographical positioning integrity of Wireless Transmit/Receive Units (WTRUs) in wireless networks based on the transmission and reception of integrity status information.

## Description

### FIELD

This disclosure pertains to methods and apparatus for supporting geographical positioning integrity of Wireless Transmit/Receive Units (WTRUs) in wireless networks based on the transmission and reception of integrity status information.

### BACKGROUND

In Rel. 16 (3GPP), downlink, uplink and downlink and uplink positioning methods are specified.

In the downlink positioning methods, Positioning Reference Signals (PRSs) are sent from multiple Transmission/Reception Points (TRPs) of a wireless communication network to the WTRU. The WTRU will observe multiple reference signals and measure time difference of arrival between a pair of PRSs. Then, the WTRU returns measured Reference Signal Time Difference (RSTD) to the Location Management Function (LMF). In addition, the WTRU can return measured Reference Signal Received Power (RSRP) for each PRS. Based on the returned measurements, the LMF conducts positioning of the WTRU. Alternatively, the WTRU can report RSRP for downlink (DL) angle-based positioning methods.

In the uplink positioning methods, the WTRU sends a Sounding Reference Signal (SRS) for positioning, configured by RRC (Radio Resource Control), to Reception Points (RPs) or TRPs. For timing-based methods, TRP measures Relative Time of Arrival (RTOA) for received SRS signals and reports measured values to the LMF. The WTRU can report RSRP for SRS. In angle-based uplink positioning methods, an RP or TRP will measure angles of arrival and report it to the LMF.

Finally, in the uplink and downlink positioning method, a WTRU measures Rx-Tx time difference between a received PRS and a transmitted SRS. The Rx-Tx time difference is reported to the LMF. The WTRU can also report measured RSRP for PRS and, the TRP computes the Rx-Tx difference between the received SRS and the transmitted PRS.

A "DL positioning method" may refer to any positioning method that requires downlink reference signals, such as PRS. In such positioning techniques, the WTRU may receive multiple reference signals from TP and measures DL RSTD and/or RSRP. Examples of DL positioning methods include DL-AoD or DL-TDOA positioning.

A "UL positioning method" may refer to any positioning technique that requires uplink reference signals, such as SRS for positioning. In such techniques, the WTRU may transmit SRS to multiple RPs or TRPs, and the RPs or TRPs measure the UL RTOA and/or RSRP. Examples of UL positioning methods include UL-TDOA or UL-AoA positioning.

A "DL & UL positioning method" may refer to any positioning method that requires both uplink and downlink reference signals for positioning. In one example, a WTRU transmits SRS to multiple TRPs and a gNB measures the Rx-Tx time difference. The gNB can measure RSRP for the received SRS. The WTRU measures Rx-Tx time difference for PRSs transmitted from multiple TRPs. The WTRU can measure RSRP for the received PRS. The Rx-TX difference, and possibly RSRP measured at the WTRU and the gNB, are used to compute round trip time. Here, Rx and Tx difference refers to the difference between arrival time of the reference signal transmitted by the TRP and transmission time of the reference signal transmitted from the WTRU. An example of DL & UL positioning method is multi-RTT (Round Trip Time) positioning.

DL-based positioning (and possibly DL&UL positioning) is either WTRU-based (i.e., the WTRU conducts positioning) or WTRU-assisted (the network conducts the positioning operations using with measurement reports sent from the WTRU).

In this disclosure, the term "network" is inclusive of AMF, LMF, and NG-RAN.

### BRIEF DESCRIPTION OF THE DRAWINGS

A more detailed understanding may be had from the detailed description below, given by way of example in conjunction with the drawings appended hereto. Figures in such drawings, like the detailed description, are exemplary. As such, the Figures and the detailed description are not to be considered limiting, and other equally effective examples are possible and likely. Furthermore, like reference numerals ("ref. ") in the Figures ("FIGs. ") indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 is a diagram illustrating positioning integrity aspects for a WTRU at two different instances of time;
FIG. 3 is a signal flow diagram illustrating signal flow for positioning and positioning integrity activities in association with DL-based positioning in accordance with an embodiment;
FIG. 4 is a signal flow diagram illustrating signal flow for positioning and positioning integrity activities in association with UL-based positioning in accordance with an embodiment;
FIG. 5 is a diagram illustrating an example of positioning integrity aspects for a WTRU for meeting integrity requirement;
FIG. 6 is a flow chart illustrating an example of a method for a WTRU to dynamically determines a set of TRPs for meeting a positioning integrity requirement; and
FIG. 7 is a flow chart illustrating an example of a method for positioning a WTRU.

### DETAILED DESCRIPTION

### Introduction

In the following detailed description, numerous specific details are set forth to provide a thorough understanding of embodiments and/or examples disclosed herein. However, it will be understood that such embodiments and examples may be practiced without some or all of the specific details set forth herein. In other instances, well-known methods, procedures, components and circuits have not been described in detail, so as not to obscure the following description. Further, embodiments and examples not specifically described herein may be practiced in lieu of, or in combination with, the embodiments and other examples described, disclosed or otherwise provided explicitly, implicitly and/or inherently (collectively "provided") herein.

### Example Networks

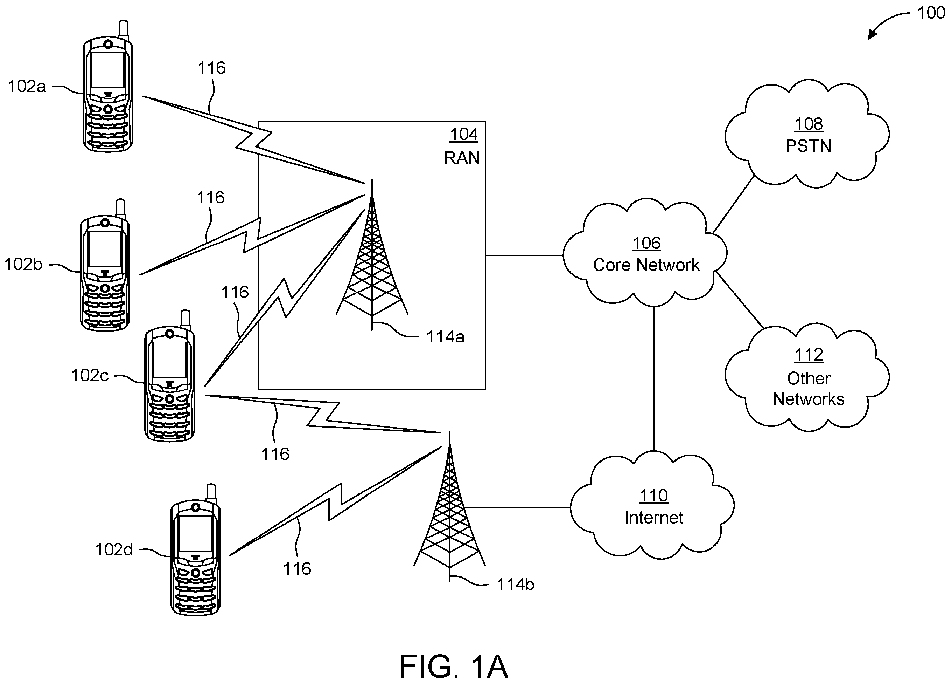

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access, which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

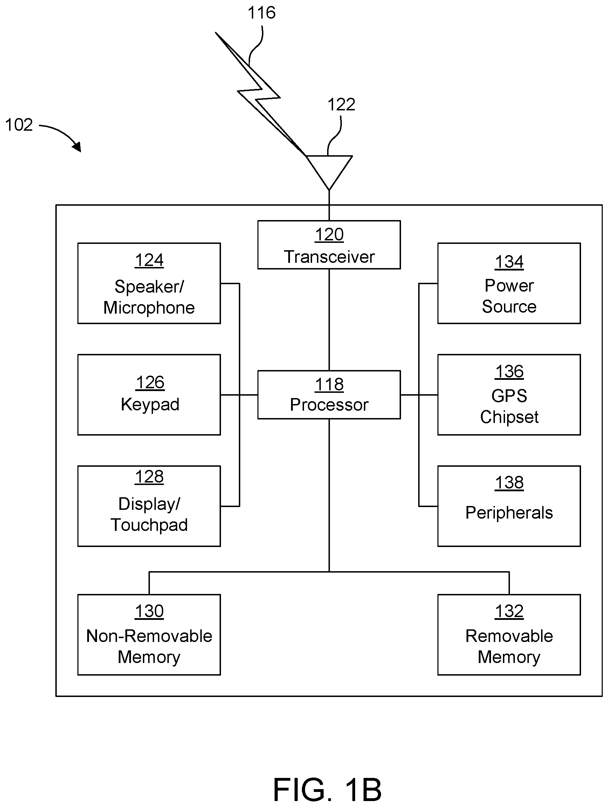

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit 139 to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the downlink (e.g., for reception)).

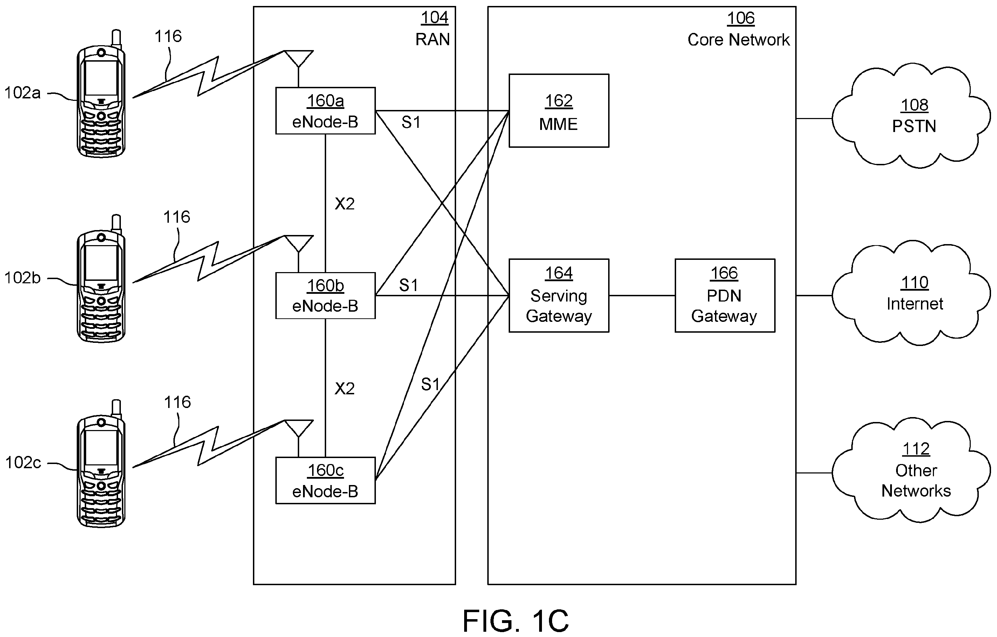

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac, 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

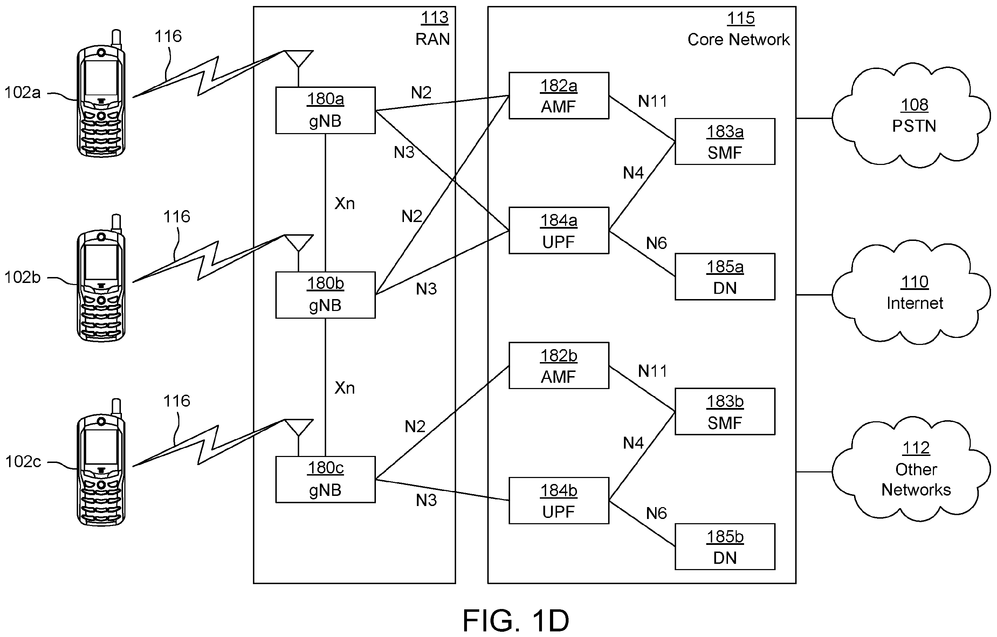

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 180b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of Non-Access Stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the DN 185a, 185b.

In view of Figs. 1A-1D, and the corresponding description of Figs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

The following descriptions of some of the terminology for positioning integrity in this specification and/or in the related industries are provided for ease of reference:
- Positioning Integrity: A measure of the trust in the accuracy of the position-related data provided by the positioning system and the ability to provide timely and valid warnings to the Location Services (LCS) client when the positioning system does not fulfil the condition for intended operation.
- Integrity Availability: The percentage of time that the Protection Limit (PL) is below the required Alert Level (AL).
- Error Event: Error Events are considered to be all possible events (i.e., of natural, systemic or operational nature) that can cause the computed position to deviate from the true position, regardless of whether a specific fault can be identified in one of the positioning systems or not.
- Target Integrity Risk (TIR): The probability that the positioning error exceeds the Alert Limit (AL) without warning the user within the required Time-to-Alert (TTA). The TIR is usually defined as a probability rate per some time unit (e.g., per hour, per second or per independent sample).
- Alert Limit (AL): The maximum allowable positioning error such that the positioning system is available for the intended application. If the positioning error is beyond the AL, the positioning system should be declared unavailable for the intended application to prevent loss of positioning integrity. When the AL bounds the positioning error in the horizontal plane or on the vertical axis, it is called Horizontal Alert Limit (HAL) or Vertical Alert Limit (VAL), respectively.
- Time-to-Alert (TTA): The maximum allowable elapsed time from when the positioning error exceeds the Alert Limit (AL) until the function providing positioning integrity annunciates a corresponding alert.
- Misleading Information (MI): A MI event occurs when the positioning system is being declared available, but the positioning error exceeds the PL.
- Hazardous Misleading Information (HMI): An HMI event occurs when the positioning system is being declared available, but the positioning error exceeds the AL without annunciating an alert within the TTA.
- Integrity Event: An Integrity Event occurs when the positioning system outputs HMI.
- Protection Level (PL): The PL is a statistical upper-bound of the Positioning Error (PE) that ensures that the probability per unit of time of the true error being greater than the AL and the PL being less than or equal to the AL, for longer than the TTA, is less than the required TIR, i.e., the PL satisfies the following inequality:
   Prob per unit of time [((PE> AL) & (PL<=AL)) for longer than TTA]
   < required TIR.

When the PL bounds the positioning error in the horizontal plane or on the vertical axis, it is called Horizontal Protection Level (HPL) or Vertical Protection Level (VPL) respectively.

### Positioning Integrity

3GPP Rel-17 supports WTRU-based and LMF-based positioning integrity for Radio Access Technology (RAT)-Independent Global Navigation Satellite System (GNSS) positioning. The WTRU behavior and the procedures for supporting positioning integrity with low latency for both RAT-Independent and RAT-dependent positioning are unknown.

Avoiding scenarios that may result in catastrophic failure in positioning (i.e., positioning error exceeds the error bound guaranteed by the positioning system) is vital. In this regard, it is important to ensure/enforce positioning integrity in a timely manner at the WTRU when determining positioning information (i.e., measurements, location) based on the integrity Key Performance Indicators (KPIs)/parameters (i.e., AL, TTA, TIR) and information on error sources/error events.

For positioning integrity, it is also important to ensure that the degree of uncertainty in the WTRU location is always below an integrity requirement threshold. The dimensions of the positioning uncertainty region (e.g., 3D ball/ellipsoid), which is a function of error bounds corresponding to a measurement configuration (e.g., the set of TRPs whose signals will be used for positioning determination) used by the WTRU for positioning, may vary due to multipath, WTRU mobility, etc. Using an incorrect measurement configuration can result in the uncertainty in the WTRU location exceeding an integrity/uncertainty threshold. For example, integrity/uncertainty can be quantified using standard deviations observed in measurements or estimated positions. A use case of application of integrity/uncertainty is autonomous driving where the vehicle must always be kept within certain error bounds to prevent accidents.

The current Rel-17 framework for integrity does not support low-latency monitoring of integrity and the ability of a positioning system to rapidly recover from integrity failure conditions. Additionally, a WTRU may be configured to support a positioning method/configuration. However, whether integrity can be ensured may not be identified until after positioning statistics are determined (e.g., standard deviation of PL distribution) over a long duration.

Furthermore, when detecting an integrity event (e.g., PL > AL), the positioning system is considered unavailable, and recovery from the failure condition is only possible via reconfiguration. This results in unnecessary delay and discontinuous positioning service.

### Assumptions About Reference Signals in This Specification

It should be noted that "SRS for positioning" refers herein to an SRS signal/transmission used for positioning. Resources for SRS for positioning may be defined (e.g., signaled) by RRC. In Rel. 16, an SRS resource set and SRS resources configured for positioning are specified. However, "SRS for positioning" or "SRS" herein may include at least one of the following:
- SRS that is configured under SRS-PosResourceSet-r16 and SRS-PosResource-r16 in [2]
- SRS that is configured under SRS-ResourceSet and SRS-Resource in [2]
- SRS that is not configured under SRS-PosResourceSet-r16 and SRS-PosResource-r16 in [2]
- SRS which is not configured under SRS-ResourceSet and SRS-Resource in [2]
- SRS which is not associated with SRS-PosResourceSet-r16, SRS-PosResource-r16, SRS-ResourceSet or SRS-Resource in [2]
- An Uplink reference signal that is associated with positioning
- Demodulated Reference Signal I(DM-RS) for uplink
- PTRS for uplink

For brevity, SRS for positioning is denoted as "SRSp". PRS or SRS as used herein are not limited to RS used for positioning. The methods and apparatus disclosed herein may be applied to or used with any DL or UL reference signals.

### Method for determining integrity/uncertainty in positioning information

The terms integrity and positioning integrity are henceforth used interchangeably to refer to the accuracy of the positioning information of the WTRU determined using one or more positioning methods/configurations. In some examples, integrity may be related to and referred to as positioning uncertainty or uncertainty in positioning information. The relationship between positioning integrity and positioning uncertainty is described herein.

In an example, the positioning information of a WTRU may be determined based on the measurements made on the PRS received from one or more measurement sources (e.g., TRPs, gNBs) and the assistance data containing information on the location of the measurement sources. The WTRU may calculate its location by determining the distances from the different TRPs, which may be determined based on timing measurement of PRS received from the TRPs, for example. Particularly, the WTRU can determine its distance from the measurement source by determining the time for the PRS signal to reach the WTRU. Thus, the distance of the WTRU from each measurement source may be associated with a circle around the measurement source having a radius equal to the determined distance based on the aforementioned PRS time delay. The WTRU is located somewhere on that circle around the measurement source. When multiple measurement sources are used, multiple circles (having differing radii and centers) on which the WTRU must lie are determined, the location of the WTRU may be determined based on the intersection of the circles/circumferences. With two TRPs/circles, the location of the WTRU usually can be narrowed down to two possible locations since two overlapping circles generally will intersect at two different points (except in the unlikely case that the centers of the two circles are separated from each other by exactly the sum of their radii, in which case, they will intersect at only one point). With three overlapping circles/TRPs, the location of the WTRU can generally be narrowed down even further to a single point since three circles generally cannot interest at more than one point.

A similar method may be used for determining positioning in GNSS system based on the reception of GNSS signals from multiple GNSS satellites.

Due to possible errors in the positioning related measurements (e.g., timing errors when measuring PRS), a tolerance value (e.g., ± margin) may be associated with each measurement source and the calculated distance/radius from the measurement source. For example, a WTRU making a measurement of the DL-PRS transmitted from a TRP may be associated with a measurement tolerance value (or equivalently, an error bound/margin (e.g., max/min values) associated with the timing measurements made on the PRS received from the TRP and corresponding calculated distance from the TRP. The error bound may represent the uncertainty in the measurement of the distance determined between the TRP and the WTRU. For the WTRU to compute the error bound, the WTRU may receive information related to the standard deviations in the measurements or quality of measurements from the network. The error bound may be a combination of standard deviations of measurements or estimation errors of elements required to compute the position.

When multiple measurements for determining WTRU location information are made from different measurement sources, the error bounds/margins associated with each measured distance/radius may be combined for determining the overall uncertainty in the WTRU positioning information. In this regard, the overall uncertainty may correspond to a spatial uncertainty region, within which the true location of the WTRU may be found. In one example, where at least 3 measurements corresponding to DL-PRS transmissions from 3 different TRPs are made by the WTRU, the uncertainty in location information may be modeled as an uncertainty region in 3 spatial dimensions (e.g., longitude, latitude, altitude), within which the WTRU may be possibly located. The size/dimensions of the uncertainty region may dynamically vary as a result of a combination of one or more factors including WTRU mobility, multipath, interference, change in the error bounds, and change in error sources.

### Methodologies for supporting positioning and integrity

In WTRU-based positioning the WTRU determines and/or calculates the WTRU location information (e.g., geographic coordinates) at least in part based on the positioning configuration (PRS/SRSp) provided by the network (e.g., in assistance data) to the WTRU and the measurements made by the WTRU and/or network. The WTRU-based positioning may also be referred to as network-assisted positioning.

In LMF-based or network-based positioning, the network (i.e., LMF or RAN) determines and/or calculates the WTRU location information (e.g., geographic coordinates) at least in part based on the (PRS/SRSp) positioning related measurements made by the WTRU and/or network. The LMF/network-based positioning may also be referred to as WTRU-assisted positioning.

In WTRU-based integrity, the integrity metrics (e.g., PL) are calculated/estimated at WTRU. WTRU-based integrity may also be referred to as network-assisted integrity.

In LMF-based or network-based integrity the integrity metrics (e.g., PL) are calculated/estimated in the network (LMF or RAN). LMF/network-based integrity may also be referred to as WTRU-assisted integrity.

### Integrity Requirements

In WTRU-based and/or LMF-based integrity, whether integrity is fulfilled or not may be determined by the WTRU or network by comparing the calculated/estimated positioning information and integrity metrics with respect to integrity requirements or integrity KPIs. The integrity requirements or integrity KPIs may be defined in terms of threshold values in terms of one or more of the following:
- Alert Limit (AL)
   ∘ For example, integrity may be fulfilled if one or more instances of the determined WTRU positioning/location information is less than or equal to one or more thresholds defined by the AL. The thresholds defined by the AL may be associated with at least one spatial dimension (e.g., vertical, horizontal), for example.
- Protection Level (PL)
   ∘ For example, integrity may be fulfilled if one or more instances of the determined WTRU positioning/location information is less than or equal to a threshold defined by the PL. The thresholds defined by the PL may be associated with at least one spatial dimension (e.g., vertical, horizontal), for example.
- Time To Alert (TTA)
   ∘ For example, integrity may be fulfilled if an alert message is generated and trigged within a time duration when the determined WTRU positioning/location information is greater than a threshold defined by AL and/or PL.

In some examples, integrity may be inversely related to the uncertainty in the positioning/location information of the WTRU. A high degree of uncertainty or large value of the aforementioned error bound in the location information (e.g., positioning information is greater than a PL threshold) may correspond to low integrity, for example. For example, with respect to integrity measurements, a high integrity measurement value may imply low positioning uncertainty. Likewise, a low degree of uncertainty or low value of the aforementioned error bound (e.g., positioning information is below a PL threshold) in the location information may correspond to high integrity, example. For example, with respect to integrity measurements, a low integrity measurement value may imply high positioning uncertainty. In this regard, integrity requirements and uncertainty requirements are inversely related and henceforth used interchangeably when describing the ability/capability to support positioning integrity.

### Positioning Configuration

A positioning configuration may include a set of information related to positioning measurement and/or SRSp transmission. One or more of following pieces of information may be included in a positioning configuration:
- One or more positioning methods used (e.g., DL-TDOA (Time Difference of Arrival), UL-TDOA, DL-AoD (Angle of Departure), UL-AoA (Angle of Arrival), Multi-RTT)
- PRS configuration
- SRSp configuration
- Uplink resource (e.g., Physical Random Access Channel (PRACH), Physical Uplink Shared Channel (PUSCH), Physical Uplink Control Channel (PUCCH) to report the positioning measurement
- One or more threshold values to determine the positioning measurement quality
- Positioning mode of operation (e.g., starting positioning mode of operation)

PRS resource configuration may include at least one of the following:
- PRS resource ID
- PRS sequence ID, or other IDs used to generate PRS sequence
- PRS resource element offset
- PRS resource slot offset
- PRS symbol offset
- Quasi Co-location Information (QCL) information related to PRS
- PRS resource set ID
- List of PRS resources or PRS resource IDs in the resource set
- Number of PRS symbols
- Muting pattern for PRS, muting parameters such as repetition factor, muting options
- PRS resource power
- Periodicity of PRS transmission
- Spatial direction information of PRS transmission (e.g., beam information, angles of transmission)
- Spatial direction information of UL RS reception (e.g., beam ID used to receive UL RS, angle of arrival)

SRSp resources configuration may include at least one of the following:
- Resource ID
- Comb offset values, cyclic shift values
- Start position in the frequency domain
- Number of SRSp symbols
- Shift in the frequency domain for SRSp
- Frequency hopping pattern
- Type of SRSp, e.g., aperiodic, semi-persistent or periodic
- Sequence ID used to generate SRSp, or other IDs used to generate SRSp sequence
- Spatial relation information, indicating which reference signal the SRSp is related to spatially
- Resource set ID
- List of SRSp resources in the resource set
- Transmission power related information
- Pathloss reference information which may contain index for Synchronization Signal Block (SSB), Channel State Information Reference Signal (CSI-RS) or PRS
- Periodicity of SRSp transmission
- Spatial direction information of SRSp transmission (e.g., beam information, angles of transmission)
- Spatial direction information of DL RS reception (e.g., beam ID used to receive DL RS, angle of arrival)

As part of its configuration, the WTRU may receive information related to the cell ID, global cell ID or TRP ID which is associated with PRS. For example, the TRP which transmits PRS is identified by the TRP ID, which may belong to a cell identified by the cell ID. The WTRU may be configured with timing information such as SFN offset for PRS or SRSp transmission. The offset is introduced to prevent the WTRU from receiving overlapping PRS in the time domain.

### Error Sources

The error sources that may impact the calculation/estimation of positioning integrity may include one or more of the following:
- Error sources for RAT-dependent positioning:
   ∘ For timing-based positioning (e.g., DL-TDoA, UL-TDoA), the error sources may include:
      ▪ Timing measurement error (e.g., ToA measurement error, reporting delay)
      ▪ WTRU clock drifting within and across PRS occasions
      ▪ Reference station/TRP synchronization (e.g., RTD error, RTD drift)
      ▪ Unknown delay in transmission or reception timing
      ▪ Radio environment (e.g., Non-Line of Sight (NLOS) delay bias, multipath, Signal to Noise Ratio (SNR) and/or RSRP of PRS, interference, WTRU velocity, Doppler effect)
      ▪ Measurement geometry (e.g., Geometric Dilution of Position (GDOP)/DOP of TRPs/gNBs)
      ▪ Cell data base accuracy (e.g., TRP coordinates, antenna height)
      ▪ Uncertainty/Quality of measurements (e.g., uncertainty in LoS/NLoS detection, PRS RSRP, PRS SINR)
      ▪ Frequency of measurement feedback between WTRU and NW
      ▪ Non-positioning error sources (e.g., radio link failures, handover failures, poor coverage)
   ∘ For angle-based positioning (e.g., DL-AoD, UL-AoA), the error sources may include:
      ▪ Angle measurement error
      ▪ Faults during beam sweep and spatial relation assessment
      ▪ gNB antenna calibration (e.g., phase distortion among antenna elements, conformity of antenna radiation pattern)
      ▪ Radio environment (e.g., NLOS angle spread, multipath reflections, interference, WTRU velocity, Doppler effect)
      ▪ Measurement geometry
      ▪ Cell data base accuracy
      ▪ Frequency of measurement feedback between WTRU and NW
      ▪ Inconsistent beamwidth across TRPs or panels at a TRP
   ∘ Error sources for RAT-independent positioning
      ▪ Satellite clock error
      ▪ Ionospheric error
      ▪ Tropospheric delay
      ▪ Satellite ephemeris error
      ▪ Multipath error
      ▪ Receiver noise
      ▪ Satellite geometry (e.g., GDOP)

In one example, the error sources may be associated with a positioning method/configuration, where a positioning configuration may be impacted by one or more error sources. It is possible that certain error sources may be common to multiple positioning methods/configurations while certain error sources may be specific to one positioning method/configuration. In other cases, the error sources may be independent of the positioning method/configuration.

### Error Events

The error events, which may be associated with the error sources and triggered or caused by one or more combination of error sources, may include the following:
a. Error events in assistance data
   ∘ For example, incorrect computation by a positioning service provider, including corrupt and/or lost data related to positioning.
   ∘ For example, external error events impacting positioning service provider, including system/station outages.
b. Error events encountered during data transmission between the network (i.e., LMF and/or RAN) and the WTRU
   ∘ E.g., Faults in data integrity, where such data may include WTRU capability data, assistance data, positioning/integrity measurement data, and/or calculated positioning/integrity data
c. Error events related to RAT-Independent (i.e., GNSS-based) positioning system
   ∘ E.g., Satellite error events, Atmospheric error events, Local Environment error events (e.g., Multipath, Spoofing, Interference)
d. Error events in WTRU
   ∘ E.g., Out of sync with network/GNSS, out of coverage, failure to receive assistant data, failure to support TIR (e.g., TIR not available for calculation), hardware/software faults
e. Error events in LMF
   ∘ E.g., hardware/software faults

In some embodiments, the term error events may be referred to as feared events or integrity events to denote the events that may potentially result in incorrect/inaccurate positioning information, possibly triggered/caused by one or more combination of different error sources.

### Methods for supporting positioning integrity based on the transmission and reception of integrity status information

### Procedures for Supporting Positioning Integrity

In a family of the embodiments for supporting positioning integrity, several procedures involving the WTRU and one or more network node/functions (e.g., RAN, AMF, LMF) may be applied. Procedures for supporting positioning integrity, which may be related to the LPP procedures for positioning, include:

Capability transfer:
- A WTRU may send one or more of the following when triggered by a positioning service (e.g., Mobile Originated - Location Request (MO-LR), Mobile Terminated-Location Request (MT-LR)) and/or when receiving a capability transfer request from the LMF for integrity:
   ∘ Number and types of positioning methods/configuration supported by the WTRU
   ∘ Capability for detecting/monitoring error source/error events
   ∘ Presence or status of error sources in the WTRU (e.g., a flag indicating whether transmission or reception timing is known, calibrated or neither and/or whether the clock drift is tracked or not)
   ∘ Number of time/frequency resources that may be monitored
   ∘ Capability to mitigate/debug error sources/error events

Assistance data transfer:
- A WTRU may send, receive, and/or request one or more of the following:
   ∘ Configurations related to integrity, which may be dependent or independent of the positioning methods configured in the WTRU. The different configurations may be associated with different identifiers/IDs. The configurations related to integrity may include at least one of more of the following: integrity KPIs/requirements, information on error sources.
   ∘ Information on error sources and/or error events, e.g., error source types (including IDs), occurrence rate, expected error/event persistence duration, magnitude of error, threat models, priority of error sources, components in the positioning systems (e.g., Application, LMF, RAN, WTRU) where the failures/error may occur. The different error sources and/or error events may be associated with different identifiers/IDs.
   ∘ Integrity KPIs/requirements associated with one or more of the following metrics: protection limit thresholds, AL, TTA, TIR.
   ∘ Configurations for supporting integrity monitoring mode, i.e., WTRU may perform auto-correcting/debugging when error source/error event is detected.
   ∘ Monitoring profiles, which may be associated with the positioning configuration, error sources, and/or error events. The configuration for a monitoring profile may include one of more of the following: monitoring periodicity, monitoring priority, time/frequency resources to monitor, monitoring time duration.
   ∘ Threat models, which may be used for deriving and detecting errors/faults based on measurements and prediction. The threat models may possibly be used for taking mitigation actions proactively during or prior to the occurrence of error sources/error events.
- A WTRU may receive assistance data related to integrity, comprising one or more of the above information items, in the following modes:
   ∘ Aperiodic (e.g., upon sending WTRU capability information)
   ∘ Periodic (e.g., upon sending integrity status report, upon sending request for periodic assistance data)
   ∘ Semi-persistent (e.g., upon sending integrity status report, upon sending request for semi-persistence assistance data)

Location/Integrity information transfer:
- A WTRU may receive, request, and/or send the integrity status information on one or more of the following:
   ∘ Calculated/estimated integrity metrics (e.g., PL).
   ∘ Error sources (detectable at WTRU and/or at network), error events, integrity events.
- A WTRU may send/receive the integrity status information either periodically, aperiodically, or semi-statically. The integrity status may be sent either along with or independent of the positioning measurement report and/or location information.
- A WTRU may receive and/or send the integrity alert messages, which may be triggered by an integrity event (e.g., PL > AL).

In some examples, the procedures may be supported interchangeably by either the assistance data transfer procedure or the location/integrity information transfer procedure or other procedures. For example, the procedure for sending/receiving the information on error sources/error events may be supported by the location information transfer procedure (e.g., in LTE Positioning Protocol (LPP)). Likewise, the procedure for sending/receiving the integrity status information may be supported by the assistance information transfer procedure (e.g., in LPP), for example. In other examples, the procedures may be supported by higher layers (e.g., application, MO-LR, MT-LT), which may be transparent to the lower layers in the network, and/or LPP procedures. For example, the sending/receiving of integrity KPIs/requirements and/or the integrity alert messages may be sent transparent to the LPP procedures in the high layers.

### Methods for Indicating Positioning Integrity Status Information

### WTRU Sends/Receives Status Information When Triggered by Integrity Conditions/Events

In one embodiment, a WTRU may receive a configuration from (be configured by) the network to send and/or receive status information on positioning integrity, including information on error sources and the associated error events. The WTRU may send and/or receive integrity status reports responsive to the occurrence of one or more of the configured triggering conditions or events, which reports may be used for calculating and tracking integrity metrics (e.g., PL, AL).

In one example, the WTRU may receive a semi-static configuration for sending/receiving the integrity status information during positioning service establishment, e.g., via one or more LPP procedures, including capability transfer, and/or assistance data transfer or RRC signaling. In another example, the WTRU may receive a dynamic configuration or activation/deactivation of preconfigured configurations for sending/receiving the integrity status to/from the LMF and/or RAN in other procedures/signaling including LPP (e.g., location request/transfer), RRC, MAC (e.g., MAC Control Element (CE)) and PHY (e.g., Downlink Control Information (DCI)).

In the case when the WTRU is configured to send integrity status information, the configuration received by the WTRU may include one or more of the following:
- Information on error sources, which may be detectable and monitored by the WTRU/network. The WTRU may receive the identifiers/IDs associated with the error source in the configuration.
- Information on Integrity/Error events, which may be detectable and monitored by the WTRU/network. The error events may or may not be associated/correlated with the error sources. The WTRU may receive the identifiers/IDs associated with the integrity/error events.
- Monitoring duration, e.g., the time duration (i.e., start/end time/offset, duration) for monitoring one or more error events.
- Monitoring/measurement resources, e.g., the time/frequency resources that may be configured in the WTRU for making measurements associated with the error sources/error events. It may be possible for the WTRU to receive a configuration comprising overlapping/non-overlapping resources for measuring/monitoring the different error sources/error events.
- Monitoring/measurement thresholds, e.g., one or more thresholds associated with error sources/error events for the WTRU to start/stop monitoring and/or sending the integrity status information.
- Reporting periodicity, e.g., periodicity for sending/receiving status information on error events.

The WTRU also may be configured with one or more integrity KPIs/requirements, including PL thresholds, AL, TTA and TIR, which may be received by the WTRU either from higher layers (e.g., NAS layer, service layer, application layer) or the network (e.g., via LPP procedures, such as capability transfer, assistance data transfer, location information transfer). The WTRU may use the received integrity KPIs/requirements for determining whether the integrity related measurements and calculations (e.g., error sources, PL) are below/above the integrity requirements and, possibly trigger a corresponding action (e.g., transmission of status information or initiating a mitigation action), for example.

Similar concepts may be applicable for WTRU-based positioning/integrity and LMF-based positioning/integrity as well as for MO-LR (WTRU-initiated positioning) and MT-LR (LMF-initiated positioning). In the case of LMF-based positioning, the WTRU may send an integrity status report to the network (RAN/LMF) based on monitoring of error sources detectable at the WTRU (e.g., blockage from a TRP, multipath), for example. Likewise, in the case of WTRU-based positioning, the WTRU may receive integrity status from the network (LMF/RAN) for error source detectable at network (e.g., synchronization error between TRPs), for example.

### Information Included in Integrity Status Information

The content of the integrity status information that may be sent and/or received by the WTRU may consist of one or more of the following:
- Information on error sources and/or error/integrity events triggered by the error sources, which may be either dependent or independent of the configured positioning configurations/methods:
   ∘ The WTRU may send the measurements related to error sources, and possibly the error events triggered by the error sources, for example. The measurements may include the actual measured values and/or information about the measured values reported as a function of the integrity/uncertainty thresholds and/or requirements (e.g., PL threshold, AL, TTA). In an example, the WTRU may send measurements including measurements related to multipath (e.g., number of multipaths received at the WTRU with received power above a configured threshold) and/or interference (e.g., SINR). In another example, the WTRU may send statistics of the measurements (e.g., number of PRS measurements above and/or below a PL threshold over a configured time duration).
   ∘ The WTRU also may include, for the error sources/error events, the information on the persistence duration (e.g., timestamp when an event is detected, start/end time for the event(s), duration of the event(s)), and/or magnitude of the error event, where the duration/magnitude may correspond to measured and/or expected/predicted values.
- Information on uncertainly and quality of measurements related to the error source:
   ∘ e.g., probability value indication or confidence value associated with the error sources/error events.
- Information on the failure cause and associated conditions:
   ∘ e.g., the reason or cause value for the triggering of the error source/error event.
- Information on priority of error sources and/or error events
   ∘ For example, the different error sources/error events may be associated with priority values, and possibly a monitoring/reporting periodicity, which may be indicated in the status information. The priority information may be used by the WTRU and/or network for determining the prioritization order for monitoring, sending the status information, frequency/periodicity of reporting, and/or triggering an integrity event mitigation action, for example.
- Information on how to mitigate/recover from error sources, where the mitigation action may be determined by the WTRU and/or network based on one or more of the following:
   ∘ Configured mapping between error source and mitigation action, where the different mitigation actions associated with the error sources/error events may be identified with IDs and (pre)configured in the WTRU. For example, a mitigation action when detecting an error event may include the triggering of an alternative (preconfigured) positioning method/configuration or the use of a hybrid/combination of two or more positioning methods/configurations.
   ∘ Pre-prepared/configured mitigation actions, which may be configured/provided to the WTRU. The WTRU may also be configured with one or more conditions/rules for triggering the preconfigured mitigation action. The WTRU may then select a mitigation action when associated conditions are met.
   ∘ A WTRU may be indicated by the network to remain at the current position and trigger the reporting of integrity status information, with or without the positioning related information/measurements, when detecting the presence of errors/faults in the information sent by WTRU. The WTRU may also be instructed by the network to perform diagnosis of the detected error source and/or send additional measurements on the error sources/error events. For example, if an error source/error event is detected either by the WTRU or network (e.g., PL > AL), then the WTRU may be allowed or instructed to switch to a different positioning method/configuration, either temporarily or for longer duration.
- Activation/deactivation of integrity monitoring mode
   ∘ For example, the WTRU or network may instruct the WTRU to activate/deactivate a monitoring mode, which may be independent or dependent of positioning methods/configurations. For example, it may be possible for the WTRU/network to activate the integrity monitoring mode for a first configured positioning method while deactivating the monitoring mode for a second configured positioning method.
   ∘ For example, when the monitoring mode is activated, the positioning system (e.g., LCS client) may assume that (1) the WTRU may be stationary (e.g., WTRU is not moving and/or the positioning information reporting is suspended) or (2) the reported WTRU positioning information is invalid and/or may be ignored. These assumptions/actions by the positioning system (e.g., LCS client) may be the result of possible triggering of integrity monitoring and/or actions for mitigation of error sources/error events.
   ∘ Alternatively, the WTRU or network may deactivate a particular monitoring mode if the error events that would be monitored in that monitoring mode are extremely unlikely to occur under the given circumstances. For example, if the WTRU and network are calibrated in terms of timing, the WTRU may indicate deactivation of a monitoring mode of integrity related to a timing-based positioning method.
- Information indirectly correlated with error sources/error events
   ∘ For example, a WTRU may indicate other information including radio link issues encountered during data transmission/RRM (Radio Resource Management) measurements (e.g., Radio Link Failure (RLF), Handover (HO) failures, number of HARQ ReTransmissions, low SINR, interference) which may be correlated and used for identifying the presence of error sources/error events impacting the positioning integrity.
   ∘ For example, a WTRU also may indicate the WTRU status information, including velocity, mobility trajectory, presence of blockages between TRP/gNB and WTRU, presence of multipath.
   ∘ For example, a WTRU also may indicate the status of positioning QoS.
   ∘ For example, the WTRU/network may send status information related to positioning QoS attributes (e.g., accuracy, latency, reliability), which may be impacted by error sources/error events.
- Calculated/estimated integrity metrics
   ∘ For example, the integrity metric(s) may include one or more values indicating the degree of uncertainty/integrity of the WTRU location, including distribution of protection limit, positioning error (i.e., error between a true/reference location and calculate/estimated location), uncertainty positioning space (i.e., 2D/3D bounded area/space where the WTRU may be located), etc.
   ∘ For example, the WTRU/network may include the corresponding statistics of the integrity metric including one of more of the following: average, standard deviation, min/max over monitoring window (time duration/frequency band).

### Triggering Conditions for Sending Integrity Status Information

The integrity status information may be sent by the WTRU based on one or more of the following triggering conditions:
- Request from higher layers
   ∘ For example, the higher layers may include higher layers in the WTRU (i.e., LCS client in WTRU for MO-LR) and/or higher layers in network (e.g., LCS client in the network for MT-LR).
- Request from network
   ∘ For example, the request may be received from the LMF (e.g., via LPP procedure) or RAN (e.g., via signaling in RRC, MAC or PHY).
- Detection/prediction of error sources and error events
   ∘ For example, the WTRU may send integrity status when triggered by one or more conditions associated with the error sources and/or error/integrity events, where the measurements made on error sources/error events may be higher/lower than the integrity/uncertainty thresholds/requirements. The WTRU may be also configured with threat models associated with the error sources/error events, which may be used to estimate the occurrence the corresponding error event, for example.
   ∘ In another example, the WTRU may send the integrity/uncertainty status when prediction of one or more error sources/error events are made, where such prediction may possibly indicate a value above/below integrity thresholds/requirement. In this case, the predictions possibly may be made using a configured threat model and/or a machine learning-based algorithm or neural network model, for example.
- Periodic or timer based
   ∘ For example, the status information may be sent either periodically, aperiodically (i.e., single shot), or semi-statically (periodic for a certain configured time duration), based on the integrity configuration. Alternatively, for a timer-based triggering, the WTRU may set a timer upon detection and/or mitigation of an integrity/error event and may send the status information upon the expiry of the timer.
- Change or reselection of positioning method/configuration
   ∘ For example, the status information may be sent by the WTRU when (re)selecting or changing one or more configured positioning methods/configurations. Another example could be unavailability of an alternative positioning method. For example, when an alternative positioning method such as GNSS positioning is not available, the WTRU may be triggered to report integrity status of the positioning method it is currently implementing.

### Methods for Determining/Ensuring Positioning Integrity

### WTRU Determines Integrity Based on Error Bounds/Margins Associated with Positioning Configuration

In one family of embodiments, the WTRU determines positioning integrity or, equivalently, the degree of uncertainty in the location information of the WTRU based on calculation of one or more positioning values/location points (e.g., spatial coordinates) of the WTRU using at least one positioning configuration (e.g., DL-PRS). Specifically, the one or more location points may be determined at different measurement/positioning occasions where the location information or the measurement(s) associated with the positioning configuration may be made.

In an example, the WTRU may determine the positioning integrity/uncertainty based on the calculation of a positioning uncertainty region using method described herein. In certain scenarios, as a result of possible errors in the positioning related measurements, which may be due to the measurement granularity applied (e.g., length of time slot or symbols associated with the PRS) and/or other possible errors in the WTRU/network (e.g., synchronization errors between the WTRU and the synchronization source in network), a tolerance value may be associated with each measurement source. For example, a WTRU making a measurement of the timing and/or angle of arrival associated with the DL-PRS transmitted from a TRP/gNB may be associated with a measurement tolerance value or, equivalently, an error bound/margin. In this case, the error bound may represent a degree of uncertainty in the measurement with respect to the actual measurement. In an example scenario where a NLOS path and/or multipath exists between the WTRU and the measurement source (e.g., TRP), the resulting error bound (i.e., associated with timing and/or angle) may be higher than a measurement made on a single LOS path due to presence of multiple reflections and delays when receiving the PRS.

When multiple measurements are made from different measurement sources (e.g., TRPs/gNBs) for determining WTRU location information, the error bounds/margins associated with each measurement source may be combined for determining an overall degree of uncertainty, which may correspond to a positioning uncertainty region. Likewise, in another example, where at least 3 measurements associated with the UL-SRSp transmissions made by a WTRU are measured by 3 different TRPs/gNBs, the degree of uncertainty in positioning may correspond to a positioning uncertainty region. When measurements are made from different measurement sources and the positioning is calculated based on the measurements, the WTRU may be inferred to be located anywhere within the positioning uncertainty region, which, in this case, may be determined as a function of the error bounds associated with each measurement source and/or the measurement errors.

In another example, the WTRU may determine the integrity based on the computation of Geometric Dilution of Precision (GDOP), which may be performed by measuring the PRS transmission from multiple measurement sources. The GDOP determined at the WTRU may increase/decrease based on the location and movement of the WTRU relative to the location of the measurement sources. For example, from the perspective of WTRU location, the GDOP may increase when multiple measurement sources are located close to each other and whose PRS transmission may overlap when received and measured at the WTRU. In this case, the increase in GDOP above a certain threshold may be determined as a error/integrity event, for example. The WTRU may perform the computation of GDOP using the error bounds/margins associated with each measurement source. For determining integrity, the WTRU may compute GDOP from different locations at different times by making measurements from a set of measurement sources as the WTRU moves, for example.

### WTRU Selects a Measurement Configuration from a Set of Pre-Configurations for Fulfilling Integrity Requirement

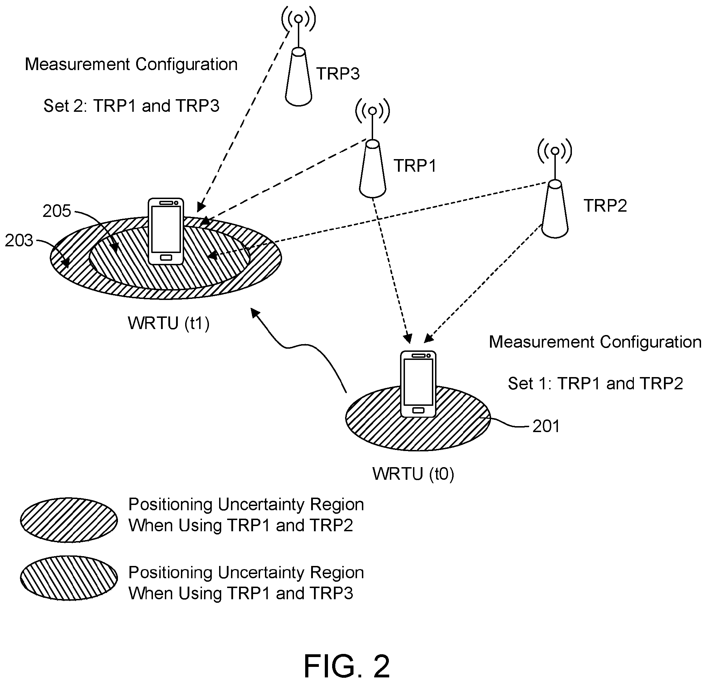

In one embodiment, the WTRU may select a measurement configuration for minimizing the positioning uncertainty and/or meeting the positioning integrity requirements based on a determined positioning uncertainty region, integrity requirements, and a configuration selection criterion. A measurement configuration may comprise a set of measurement sources (e.g., TRPs), the associated configuration of PRS to be received from the measurement sources, and/or associated error bounds/margins (e.g., standard deviation parameters), for example. In this case, the positioning uncertainty region determined by the WTRU using a particular measurement configuration may vary dynamically at different locations and time instances. For example, FIG. 2 is a diagram illustrating positioning integrity aspects for a WTRU at two different instances of time, t0 and t1 and two different positions. The positioning uncertainty region determined using a first measurement configuration at time t0 at the first location may differ compared to the positioning uncertainty region determined using the same first measurement configuration at time t1 at a second location. This may be due to dynamically changing error bounds in the measurements associated with at least one measurement source in the measurement configuration, for example.

The WTRU may receive one or more (preconfigured) measurement configurations from the network, for example, in assistance information. The different measurement configurations may be associated with an identifier/ID. In an example, the WTRU may use a first/default measurement configuration (e.g., initial set of TRPs) indicated in the assistance data. In another example, the WTRU may also use a measurement configuration based on the number of measurement sources accessible within the measurement configuration. For example, a measurement configuration may be considered to be accessible by the WTRU when the measurements made on the received reference signals (e.g., RSRP, RSRQ, SINR) and/or beams (e.g., SSB) from several measurement sources (e.g., at least 2) associated with the measurement configuration exceed certain threshold value(s).

The WTRU may also receive one or more integrity/uncertainty requirements, and/or information on WTRU-based error sources/error events from upper layers/application, for example. The integrity/uncertainty requirements may include at least one of the following integrity/uncertainty thresholds: protection level threshold, alert limit threshold, time to alert threshold. The information on WTRU-based error sources/error events can include timing synchronization errors/offsets in WTRU, for example.

The WTRU may use the one or more measurement configurations for determining positioning integrity/uncertainty based on calculation of the positioning uncertainty region and the comparison of the calculated positioning uncertainty region with respect to an integrity/uncertainty threshold, for example. For example, the WTRU may use a first and a second measurement configurations to determine the positioning uncertainty regions and compare the determined positioning uncertainty regions with respect to an integrity/uncertainty threshold (e.g., PL, AL) for identifying the measurement configuration to use.

For ensuring integrity, the WTRU may be configured with a configuration selection criterion for selecting a measurement configuration from one or more preconfigured measurement configurations when triggered by an integrity event. An integrity event may correspond to the size/dimensions of the determined positioning uncertainty region exceeding an integrity/uncertainty threshold, for example. The WTRU may be configured with the configuration selection criterion, possibly along with information on integrity events (e.g., thresholds), by the RAN (e.g., via RRC signaling) or CN function (e.g., LMF via LPP signaling). The configuration selection criterion may indicate selecting a measurement configuration from one or more (preconfigured) measurement configurations when detecting an integrity event and/or when the following conditions are met:
- Measurements made over the RS/beams received from the measurement sources associated with a measurement configuration (e.g., RSRP, RSRQ, SINR) are above or equal to certain threshold value(s) over a measurement duration.
- Positioning uncertainty region determined using a measurement configuration is minimum among the different positioning uncertainty regions determined using other accessible measurement configurations.

The WTRU may then send the selected measurement configuration (e.g., ID of the measurement configuration and/or IDs of the TRPs associated with a measurement configuration) to the network for ensuring integrity requirements are satisfied. The WTRU may also send to the network the measurements made over the PRS/RS/beams received from the measurement sources.

FIG. 2 is a diagram illustrating some of the positioning integrity aspects discussed above. In the example of FIG. 2 the WTRU first determines a positioning uncertainty region 201 at t0 when it is at position p0. The positioning uncertainty region 201 may be determined by WTRU based on the measurements made on the PRS received from TRP1 and TRP2 and the error bounds associated with TRP1 and TRP2, for example.

The WTRU may then determine the positioning uncertainty region at t1, possibly at a second location p1, using the first measurement configuration (TRP1 and TRP2). Thuis uncertainty region is labelled 203 in FIG. 2. It may be possible that the dimensions of the determined positioning uncertainty region to have changed (i.e., increased or decreased) as a result on the movement of the WTRU and/or the measurements made on PRS received from the TRPs, for example.

In the case when the determined positioning uncertainty region using the first measurement configuration 203 is greater than an integrity/uncertainty threshold, the WTRU may select a second measurement configuration (e.g., associated with TRP1 and TRP3), which may result in a positioning uncertainty region 205 that is below the integrity/uncertainty threshold. The WTRU may then indicate the selected second measurement configuration to the network.

### WTRU Selects a Positioning Configuration to Achieve Different Levels of Positioning OoS/Integrity

In one embodiment, based on integrity related triggering conditions, the WTRU may dynamically select a level of positioning QoS and/or integrity that may be supported for a positioning configuration. A WTRU may be configured with at least one positioning configuration along with different sub-configurations which may be associated with different levels of positioning QoS (e.g., different target accuracy, latency) and/or positioning integrity (e.g., different PL and AL requirements).

The different sub-configurations may comprise different resource configurations (e.g., PRS/SRSp resources, set of beams/TRPs/gNBs) that may achieve different positioning QoS/integrity levels, which may be allowed and supported for a positioning service (e.g., MO-LR or MT-LR). In this case, the different positioning QoS/integrity levels for a positioning configuration may be as a result of the presence of different impacting error sources/error events that may be tolerable for the positioning service, for example. The configuration information on the different levels of positioning QoS and/or integrity for a positioning configuration/sub-configuration may be received by the WTRU either from the network (e.g., in assistance data) or by higher layers within the WTRU.

In one example, the WTRU may dynamically select/unselect a positioning (sub)configuration to achieve an allowed positioning QoS and/or integrity level, when triggered by one or more of the triggering conditions previously described herein under the heading Triggering Conditions for Sending Integrity Status Information in this section 5.1 of this specification. For example, the WTRU may select a positioning (sub)configuration that may achieve a lower positioning QoS or lower integrity level, possibly allowable for a positioning service, when detecting one or more error sources associated with the positioning configuration. In another example, the selection/un-selection of a positioning configuration with different QoS and/or integrity level for a positioning configuration/service may be made by the network (LMF/RAN) and indicated to the WTRU, possibly based on the information on error sources and/or integrity indicated by WTRU in the integrity status information.

### WTRU Performs Suspension and/or Resumption of Positioning During Integrity/Error Event Mitigation

In one embodiment, the WTRU may suspend (or resume) one or more positioning methods/configurations when detecting/mitigating error sources/error events associated with the positioning methods/configurations, if it is deemed that those error sources/error events may compromise the positioning information determined using the aforementioned positioning methods/configurations. As examples, the WTRU may suspend the positioning configurations(s) by suspending the actions associated with making measurements, performing positioning calculations, and sending measurement reports/location information, for minimizing the use of resources and power savings.

For DL-based positioning (e.g., applicable for WTRU-based and/or LMF-based positioning), the WTRU may perform one or more of the following actions associated with positioning suspension:
- The WTRU may suspend decoding of the received PRS and may send an indication to the network (e.g., SR/BSR) to request a UL grant or to activate a configuration grant (CG) when it detects one or more error source/integrity events. The WTRU may use the received resource(s) for sending integrity status information to the LMF, for example. The WTRU may prioritize the transmission of integrity status information over other transmissions (e.g., data or other RS) based on priority assigned to the error source/error event, for example.
- Prior to the aforementioned transmission of the indication to the network to request a UL grant or to activate a configuration grant (CG), the WTRU may send an explicit indication to suspend positioning.
- The WTRU may receive a DL indication from the RAN to suspend positioning when one or more error sources/error events are detected by the LMF/RAN. The WTRU may receive the DL indication in the same or a different resource configuration used by the WTRU for PRS measurement, for example.

For UL-based and UL+DL based (e.g., multi-RTT) positioning (e.g., applicable for WTRU-based and/or LMF-based positioning), the WTRU may perform one or more of the following actions associated with positioning suspension:
- The WTRU may suspend transmitting SRSp and may send an indication (e.g., SR/BSR) to the network in the same or a different resource configuration used for SRSp. The WTRU may also send a different SRSp configuration/pattern that may be used for implicitly indicating a request for UL grant or activating CG, for example. Alternatively, the WTRU may directly send the integrity status information using at least in part the same resources used for or associated with SRSp transmissions.
- The WTRU may receive DL indication from the RAN during/after SRSp transmission to suspend positioning when one or more error sources/error events are detected by the LMF/RAN.

For DL-based, UL-based and UL+DL based, the WTRU may perform one or more the following actions associated with positioning resumption:
- The WTRU may resume positioning (i.e., PRS measurement or SRSp transmission) upon detection of one or more triggering conditions, which may include the following: reception of a resumption indication from a higher layer, reception of a resumption indication from the network (RAN/LMF), expiry of a suspension timer, (preconfigured) meeting of conditions/measurements made at the WTRU (e.g., measurements associated with error event, monitored integrity level) with respect to a configured threshold value.
- In an example, the WTRU may use the same or a different resource configuration (for PRS and/or SRSp) as the one used before the suspension when resuming positioning.
- In another example, the WTRU may fall back to a default/alternative positioning method/configuration upon resumption, which resumption may be triggered for integrity recovery. The resumption to a default method may be (pre)configured such that it may be triggered either immediately or after a certain configured time duration upon the suspension of the previous positioning method, for example. The default positioning method may have either no integrity, lower integrity, or higher integrity requirements/thresholds than the positioning method/configuration used prior to suspension, for example.

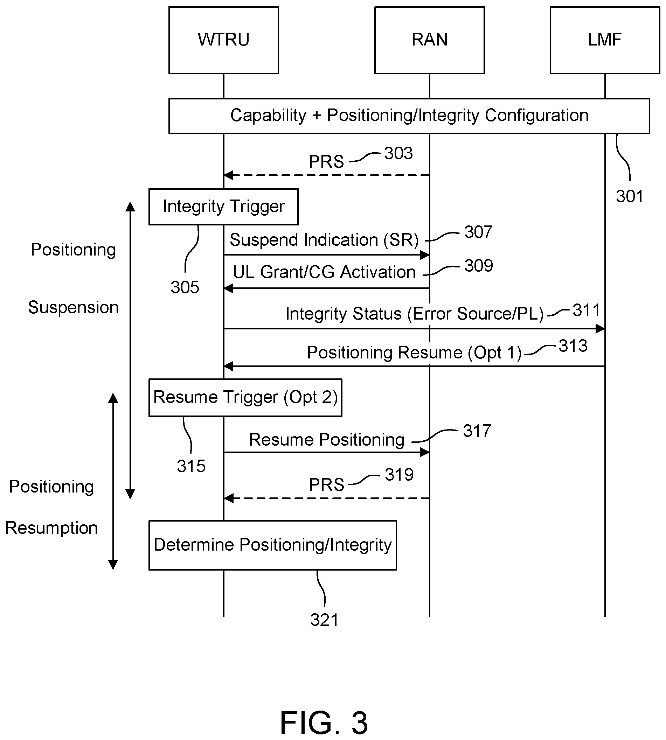

FIG. 3 is a signal flow diagram illustrating signal flow for an exemplary embodiment of positioning and positioning integrity activities in association with DL-based positioning, including suspension of positioning activities due to an integrity trigger event and subsequent resumption. As illustrated at 301, the WTRU has already reported its positioning and positioning integrity capabilities to the RAN and LMF and is configured with positioning and positioning integrity configurations. Thus, the WTRU is receiving PRS signals 303 from the RAN and performing positioning and positioning integrity functions normally.

However, at 305, the WTRU detects an integrity trigger (e.g., an error event or error source). Thus, the WTRU transmits a suspend indication 307 to the RAN (e.g., a SR, BSR) to indicate the suspension of positioning activities, and to request a UL grant or to activate a CG so it can send an integrity status report to the network. In response, the RAN transmits the requested UL grant or CG activation 309 to the WTRU. Then, the WTRU transmits an integrity status report 311 to the network.

In one exemplary embodiment (illustrated as Option 1 in FIG. 3), the WTRU may resume positioning upon receiving a positioning resume indication 313 from the LMF. In another embodiment (illustrated as Option 2 in FIG. 3), the WTRU may autonomously determine that the positioning integrity is sufficient (315). In either case, the WTRU resumes positioning functionality and informs the network thereof (317). The WTRU then starts receiving the PRS 319 from the network again and determining its positioning integrity 321.

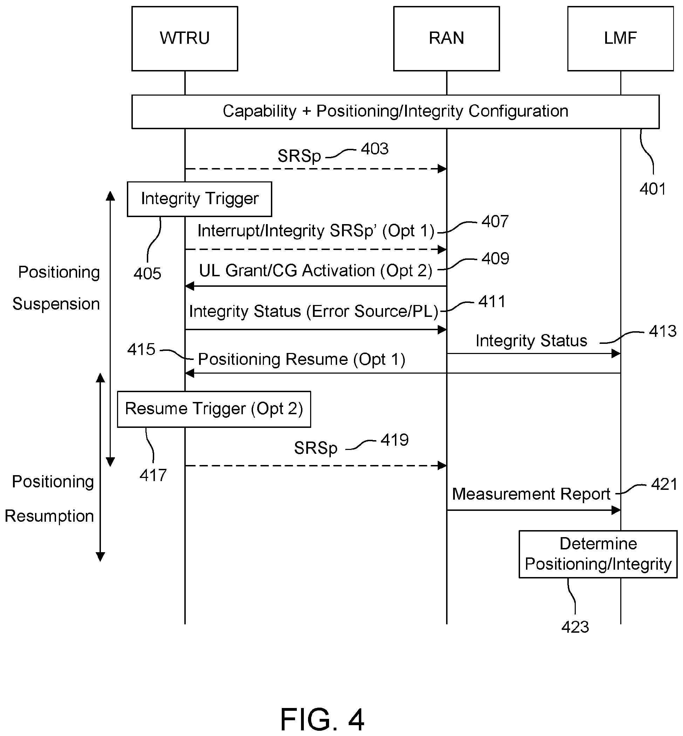

FIG. 4 is a signal flow diagram illustrating signal flow for an exemplary embodiment of positioning activities in association with UL-based positioning including suspension of positioning activities due to an integrity trigger event and subsequent resumption. As illustrated, at 401, the WTRU has already reported its positioning and positioning integrity capabilities to the RAN and LMF and is configured with positioning and positioning integrity configurations. Thus, the WTRU is transmitting SRSp signals 403 to the RAN and performing positioning and positioning integrity functions normally.

However, at 405, the WTRU detects an integrity trigger (e.g., an error event or error source). Thus, the WTRU suspends SRSp transmissions and transmits a suspend indication 407 to the RAN (which may be in the same resources used for SRSp transmission previously). In response, the RAN transmits a UL grant or CG activation 409 to the WTRU for the WTRU to send a positioning integrity report to the network. The WTRU transmits the integrity status report 411 to the RAN, and the RAN forwards it to the LMF (413). In one exemplary embodiment, when the network (e.g., the LMF) determines that the positioning integrity of the WTRU is satisfactory (e.g., exceeds the required minimum level or drops below a threshold), it sends a positioning resume message 415 to the WTRU. In another embodiment, the WTRU autonomously determines that the positioning integrity has exceeded the minimum threshold or drops below a threshold (417). In either case, when the threshold is met, the WTRU resumes positioning functionality and starts transmitting SRSp signals 419 again. The LMF also resumes determining the WTRU's positioning integrity 423.

### Methods for Supporting Positioning Integrity Based on Recovery from Positioning Failure Conditions

### WTRU Uses Integrity Configurations for Recovering from Positioning Failure Conditions

In one embodiment, the WTRU enforces and/or maintains positioning integrity by using integrity related configurations to recover from any failures associated with positioning and/or integrity. A positioning and/or integrity failure (e.g., integrity event) may be related to any erroneous/faulty condition that may result in loss of accuracy, latency, reliability, and/or integrity when determining the WTRU location information, for example.

In an example, the WTRU may receive integrity related configurations (e.g., assistance data from the network or from a higher layer within the WTRU) along with configurations for enabling recovery from positioning failures conditions. The configurations received by the WTRU for enabling recovery may include one or more of the following:
- Alternative positioning configurations
   ∘ The alternative configurations may be used/selected when a configured positioning configuration fails and/or error sources/error events associated with the configured positioning configurations are active and detected, for example.
- Recovery time duration(s)
   ∘ The WTRU may be configured with one or more recovery time durations, which may represent the maximum amount of time available for recovering from a positioning/integrity failure condition before sending an alert message to the network/higher layer.
- Recovery timer(s)
   ∘ The WTRU may start a recovery timer when detecting a failure condition (e.g., integrity metric exceeds a threshold) and may attempt to recover from failure conditions by triggering a recovery action/mechanism before the expiry of the recovery timer. If the integrity metric (e.g., PL) drops below a threshold after triggering the recovery mechanism within the recovery duration, the recovery timer can be cancelled.
- Recovery threshold values
   ∘ The WTRU may be configured with one or more threshold values, possibly related to integrity metrics (e.g., PL), for determining whether the recovery from a failure condition is successful. For example, a recovery may be successful if the calculated integrity/uncertainty increases/decreases beyond a threshold value upon triggering a recovery mechanism.

In one example, the WTRU may start/set a recovery timer and trigger a recovery action/mechanism (e.g., selection of an alternative positioning configuration) when the integrity metric (e.g., PL) increases above a first threshold value. The WTRU then monitors the integrity metric over the duration of a recovery duration. If the integrity metric decreases below the first threshold before the expiry of the recovery duration, the WTRU may cancel the recovery timer. Otherwise, if the integrity metric increases above a second threshold (e.g., AL) before the expiry of the recovery duration, the WTRU may trigger an alert message to the network and/or higher layer for indicating an integrity event, and possibly integrity failure.

For WTRU-based positioning/integrity, the WTRU may calculate/determine the integrity metric (e.g., PL). Likewise, for LMF-based positioning/integrity, the WTRU may estimate the integrity metric based on detection of one or more error sources/error events. For supporting recovery from integrity/positioning failure conditions, when using either method, the WTRU may perform one or more of the following:
- Detect positioning/integrity failure condition.
   ∘ For example, the WTRU may detect a failure or an integrity event when the determined/calculated integrity metric increases/decreases above a threshold value.
- Identify candidates for recovery actions.
   ∘ For example, the WTRU may identify one or more candidate recovery actions to address the integrity event, which may be preconfigured in the WTRU. The recovery actions may include selection of an alternative positioning configuration, including selection of a different resource configuration (e.g., different PRS/SRSp and or TRPs/gNBs), for example.
   ∘ The WTRU may identify the candidates for recovery actions based on a (configured) mapping between the integrity event/failure condition and one or more recovery actions.
- Trigger a recovery action/mechanism or send an indication/request to the network for triggering a recovery action.
   ∘ The WTRU may (autonomously) initiate a recovery action for mitigating the integrity event, when the one or more candidate recovery actions are available and may be triggered by WTRU. Alternatively, the WTRU may indicate to the network the integrity event and/or request triggering of a recovery action.
- Receive response for recovery and monitor integrity.
   ∘ Upon triggering the recovery action, the WTRU may track/monitor the integrity metrics and send integrity status information as per the configuration.

In another solution, the WTRU may send an indication to the network seeking assistance with recovery from the positioning/integrity failure condition (e.g., request to assist WTRU or indication to assist network). The indication sent by the WTRU may contain one or more of the following:
- Parameters associated with the recovery mechanism, possibly determined by the WTRU, e.g., information on resources, resource set, beams which may be triggered.
- Selection/activation from preconfigured candidate recovery actions/mechanisms based on a mapping rule and detection of error sources/error events associated with the configured positioning configurations (e.g., change in WTRU radio environment such as detection of NLOS delay or multipath, blockage of PRS from a TRP, detection of timing measurement error). The WTRU also may indicate the identifier/ID of the selected recovery action/mechanism to the RAN/LMF.
- Information on the detected integrity event and/or estimated/calculated integrity metric value(s), which may include statistics of PL distribution over a monitoring window/duration (e.g., mean, standard deviation, min, max), for example.

### WTRU Preemptively Prepares for Recovery from Integrity Event and/or for Sending Integrity Alert Message

In one embodiment, the WTRU may proactively prepare for recovery or transmission of an alert message by preemptively requesting resources (e.g., a UL grant or configured grant (CG)) based on detection of a potential integrity event and/or positioning/integrity failure condition.

For WTRU-based or LMF-based integrity, when sending the alert message or other recovery related indication to the network, the WTRU may trigger SR/BSR (Status Report/Buffer Status Report) only after a PDU containing the alert/recovery message is generated and arrives from a higher layer in a buffer (i.e., LCH buffer) upon detection of an integrity event. Since certain positioning services have stringent latency requirements, triggering a resource request reactively only after the generation of a PDU may result in possible inability to send the alert message within the integrity requirement (e.g., TTA).

In this regard, the WTRU may use the integrity related configurations (e.g., recovery thresholds and/or recovery timer) for preemptively triggering the request for resources. For example, if the integrity metric (e.g., PL) exceeds a threshold and/or remains above a threshold over a certain duration, the WTRU may perform one or more of the following:
- For WTRU-based integrity associated with MT-LR, the WTRU may trigger SR/BSR (preemptively) or activate (preconfigured) CG for sending the recovery indication or alert message when the calculated integrity metric approaches AL (e.g., increases above a threshold, which may be below or equal to AL).
- For WTRU-based integrity associated with MO-LR, the WTRU may generate and send an alert message to a higher layer when the calculated integrity metric approaches AL.
- For LMF-based integrity associated with MT-LR or MO-LR, the WTRU may trigger SR/BSR (preemptively) or activate (preconfigured) CG for sending integrity status information (e.g., information on error source/error events/PL) when the estimated/calculated integrity metric (e.g., PL) approaches AL (e.g., increases above a threshold, which may be below or equal to AL).
- For LMF-based integrity associated with MO-LR, the WTRU may generate and send integrity status information to a higher layer when the calculated integrity metric approaches AL.

Upon sending the recovery indication, alert message, or integrity status information to the network, the WTRU may perform one or more of the following:
- Switch to a default/fallback positioning configuration, upon receiving a command/indication from the network.
- Autonomously resume/activate a fallback/default positioning configuration.
- Operate without positioning configuration.
- Restart a recovery timer for reattempting recovery for a reduced level of positioning service QoS (e.g., lower accuracy, latency tolerant) and/or integrity performance (e.g., more relaxed integrity/uncertainty thresholds).

### Example of a Methods implemented in a WTRU for Positioning the WTRU

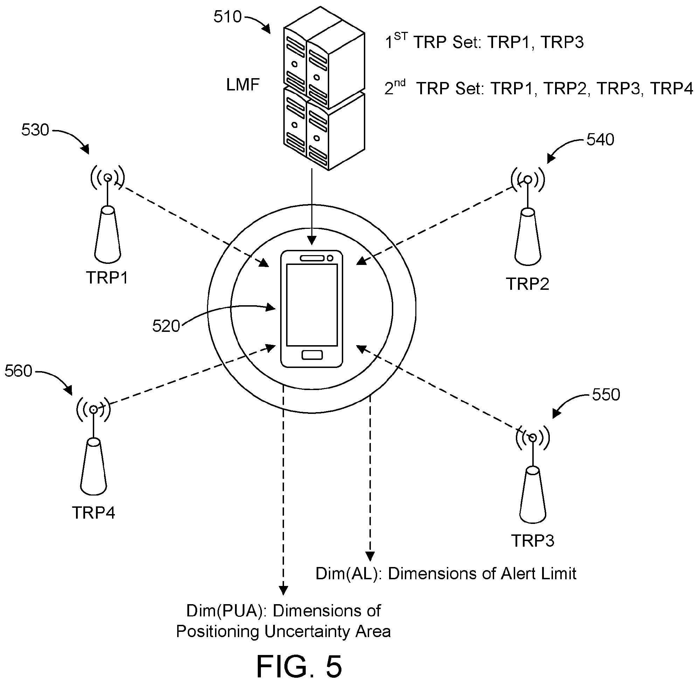

FIG. 5 is a diagram illustrating an example of positioning integrity aspects for a WTRU for meeting integrity requirement. For example, a network element 510 (e.g., an LMF) may transmit to the WTRU 520 a first message comprising first information indicating a positioning reference signal (PRS) configuration associated with a first positioning method. The first positioning method may include identifying resources for PRS transmission from a first set of TRPs (530, 550), an error detection configuration identifying resources for PRS transmissions from a second set of TRPs (530, 540, 550, 560), and one or more error bounds for the TRPs of the first set and of the second set. The network element 510 may further transmit to the WTRU 520 a second message comprising a second information indicating an integrity threshold corresponding to the dimensions of an alert limit (Dim(AL)) of an positioning uncertainty area. The second information may further indicates a minimum number of TRPs (min#TRPs) such that the WTRU 520 may determine its dimensions of positioning uncertainty area (Dim(PUA)). More particularly, the WTRU 520 may measure PRS from the first set of TRPs and may determine Dim(PUA) based on the measured PRS from the first set of TRPs and based on error bounds.

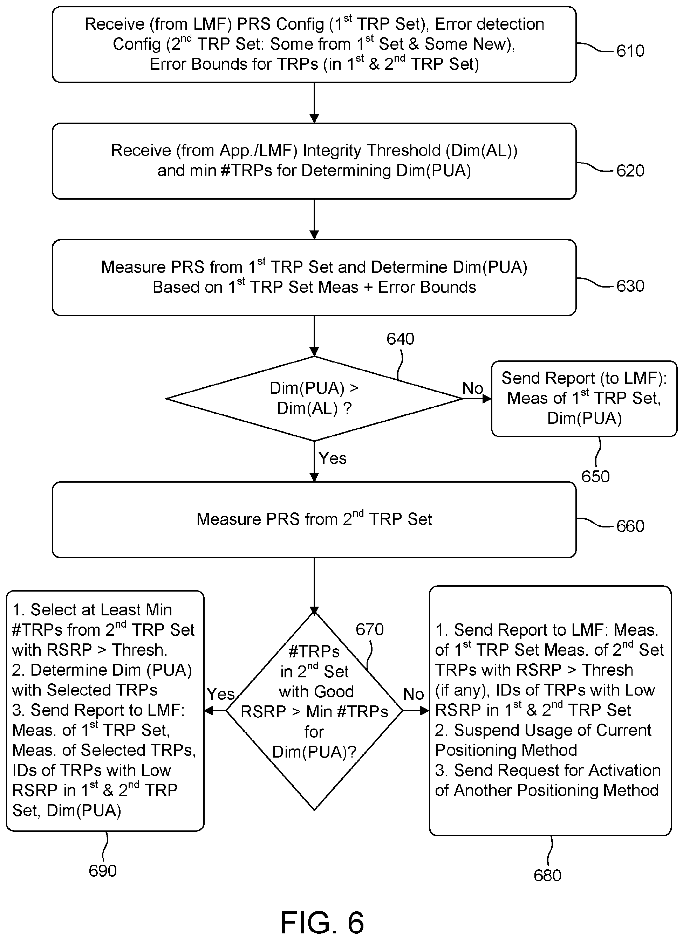

As such, FIG. 6 depicts an example of a method for the WTRU 520 to dynamically determines a set of TRPs for meeting a positioning integrity requirement defined by the dimensions of the alert limit (Dim(AL)) of the positioning uncertainty area. At step 610, the WTRU 520 may receive from the network element 510 (e.g., LMF) the first message comprising the first information as mentioned in the description of FIG. 5. At step 620, the WTRU 520 may receive from the network element 510 the second message comprising the second information as mentioned in the description of FIG. 5. At step 630, the WTRU may measure PRS from the first set of TRPs and may determine Dim(PUA) based on the measured PRS from the first set of TRPs and based on error bounds. At step 640, the WTRU may compare the determined Dim(PUA) with the received Dim(AL). In case of Dim(PUA) is not greater than Dim(AL), at step 650, the WTRU 520 may transmit to the network element 510 a first report including the measurement of PRS from the first set of TRPs and the determined Dim(PUA). In case of Dim(PUA) is greater than Dim(AL), then, at step 660, the WTRU 520 may measure PRS from the second set of TRPs. At step 670, the WTRU may compare the number of TRPs (#TRPs) of the second set from which received signal reference power provides Dim(PUA) greater than Dim(AL) with the min#TRPs. More particularly, the WTRU may compare the number of TRPs (#TRPs) of the second set from which received signal reference power (RSRP) is greater than a RSRP threshold with the min#TRPs.

In case of the #TRPs of the second set from which received signal reference power (RSRP) is greater than a RSRP threshold is not greater than the min#TRPs, at step 680, the WTRU 520 may:
transmit a second report to the network element 510 including any of the measurements of the first set of TRPs, the measurements of the second set of TRPs for which RSRP is greater than the RSRP threshold, if any, and identifiers of TRPs of the first set and of the second set with RSRP not greater than the RSRP threshold;
suspend the usage of the first positioning method; and
transmit, to the network element, a request for activation of another positioning method.

In case of the #TRPs of the second set from which RSRP is greater than the RSRP threshold is greater than the min#TRPs, at step 690, the WTRU 520 may:
select at list a min#TRPs from the second set with RSRP greater than the RSRP threshold;
determine Dim(PUA) with the selected TRPs
transmit to the network element 510 a third report including: the measurements of the first set of TRPs, the measurement of the selected TRPs, identifiers of the TRPs of the first set and of the second set with RSRP not greater than the RSRP threshold, and the Dim(PUA).

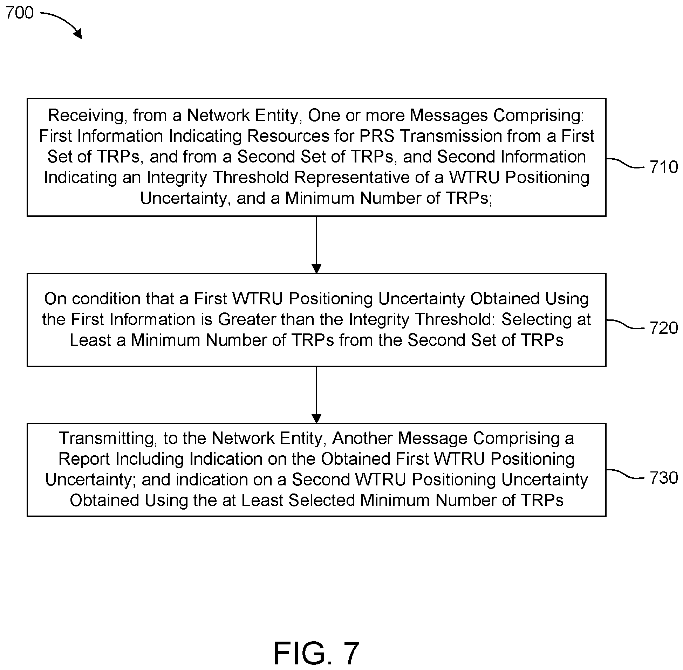

More generally, according to FIG. 7, in an embodiment, a method implemented in a WTRU for positioning the WTRU may comprise the steps of:
receiving 710 from a network entity, one or more messages comprising:
   first information indicating resources for PRS transmissions from a first set of TRPs, and also resources for PRS transmission from a second set of TRPs, and
   second information indicating an integrity threshold representative of a WTRU positioning uncertainty, and a minimum number of TRPs;
on condition that a first WTRU positioning uncertainty obtained/determined using the first information, is greater than the integrity threshold: selecting 720 at least a minimum number of TRPs from the second set of TRPs; and
transmitting 730, to the network entity, another message comprising a report including an information indicating a level/a degree/an amount or a severity of the obtained first WTRU positioning uncertainty; and an information indicating a level/a degree/an amount or a severity of a second WTRU positioning uncertainty obtained using the at least selected minimum number of TRPs.

More particularly, the first information may indicate an error detection configuration identifying resources for PRS transmissions from the second set of TRPs, and one or more error bounds. The WTRU may measure one or more PRS transmissions from the first set of transmission-reception points, TRPs. The WTRU may determine the first WTRU positioning uncertainty based on the measured PRS transmission from the first set of TRPs and based on the one or more error bounds.

More particularly, on condition that the first WTRU positioning uncertainty is greater than the integrity threshold, the WTRU may measure one or more PRS transmissions from the second set of TRPs and may determine a respective received power signal values for each PRS transmissions from each TRP of the second set.

More particularly, the selected at least minimum number of TRPs from the second set of TRPs may be the TRPs from the second set from which respective received power signal values are greater than a received power signal value threshold.

More particularly, the second WTRU positioning uncertainty may be determined based on the received power signal value of the selected TRPs and based on the error bounds.

The report may include an information indicating a level of the measurements of the selected TRPs. The report may include an information indicating a level of the received signal power values of the selected at least minimum number of TRPs.

### References

The following references may have been referred to hereinabove and are incorporated in full herein by reference.
[1] 3GPP, "User Equipment (UE) positioning in NG-RAN," TS 38.305, ver. 16.1.0, July 2020.
[2] 3GPP, "Radio Resource Control (RRC) protocol specification," TS 38.331, ver. 16.1.0, July 2020.

### Conclusion

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU 102, WTRU, terminal, base station, RNC, or any host computer.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed. "

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits. It should be understood that the exemplary embodiments are not limited to the above-mentioned platforms or CPUs and that other platforms and CPUs may support the provided methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

In an illustrative embodiment, any of the operations, processes, etc. described herein may be implemented as computer-readable instructions stored on a computer-readable medium. The computer-readable instructions may be executed by a processor of a mobile unit, a network element, and/or any other computing device.

There is little distinction left between hardware and software implementations of aspects of systems. The use of hardware or software is generally (but not always, in that in certain contexts the choice between hardware and software may become significant) a design choice representing cost vs. efficiency tradeoffs. There may be various vehicles by which processes and/or systems and/or other technologies described herein may be effected (e.g., hardware, software, and/or firmware), and the preferred vehicle may vary with the context in which the processes and/or systems and/or other technologies are deployed. For example, if an implementer determines that speed and accuracy are paramount, the implementer may opt for a mainly hardware and/or firmware vehicle. If flexibility is paramount, the implementer may opt for a mainly software implementation. Alternatively, the implementer may opt for some combination of hardware, software, and/or firmware.

The foregoing detailed description has set forth various embodiments of the devices and/or processes via the use of block diagrams, flowcharts, and/or examples. Insofar as such block diagrams, flowcharts, and/or examples contain one or more functions and/or operations, it will be understood by those within the art that each function and/or operation within such block diagrams, flowcharts, or examples may be implemented, individually and/or collectively, by a wide range of hardware, software, firmware, or virtually any combination thereof. Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

Although features and elements are provided above in particular combinations, one of ordinary skill in the art will appreciate that each feature or element can be used alone or in any combination with the other features and elements. The present disclosure is not to be limited in terms of the particular embodiments described in this application, which are intended as illustrations of various aspects. Many modifications and variations may be made without departing from its spirit and scope, as will be apparent to those skilled in the art. No element, act, or instruction used in the description of the present application should be construed as critical or essential to the invention unless explicitly provided as such. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is to be understood that this disclosure is not limited to particular methods or systems.

It is also to be understood that the terminology used herein is for the purpose of describing particular embodiments only, and is not intended to be limiting. As used herein, when referred to herein, the terms "station" and its abbreviation "STA", "user equipment" and its abbreviation "UE" may mean (i) a wireless transmit and/or receive unit (WTRU), such as described infra; (ii) any of a number of embodiments of a WTRU, such as described infra; (iii) a wireless-capable and/or wired-capable (e.g., tetherable) device configured with, inter alia, some or all structures and functionality of a WTRU, such as described infra; (iii) a wireless-capable and/or wired-capable device configured with less than all structures and functionality of a WTRU, such as described infra; or (iv) the like. Details of an example WTRU, which may be representative of any WTRU recited herein, are provided below with respect to FIGs. 1A-1E, 2 and 3.

In certain representative embodiments, several portions of the subject matter described herein may be implemented via Application Specific Integrated Circuits (ASICs), Field Programmable Gate Arrays (FPGAs), digital signal processors (DSPs), and/or other integrated formats. However, those skilled in the art will recognize that some aspects of the embodiments disclosed herein, in whole or in part, may be equivalently implemented in integrated circuits, as one or more computer programs running on one or more computers (e.g., as one or more programs running on one or more computer systems), as one or more programs running on one or more processors (e.g., as one or more programs running on one or more microprocessors), as firmware, or as virtually any combination thereof, and that designing the circuitry and/or writing the code for the software and or firmware would be well within the skill of one of skill in the art in light of this disclosure. In addition, those skilled in the art will appreciate that the mechanisms of the subject matter described herein may be distributed as a program product in a variety of forms, and that an illustrative embodiment of the subject matter described herein applies regardless of the particular type of signal bearing medium used to actually carry out the distribution. Examples of a signal bearing medium include, but are not limited to, the following: a recordable type medium such as a floppy disk, a hard disk drive, a CD, a DVD, a digital tape, a computer memory, etc., and a transmission type medium such as a digital and/or an analog communication medium (e.g., a fiber optic cable, a waveguide, a wired communications link, a wireless communication link, etc. ).

The herein described subject matter sometimes illustrates different components contained within, or connected with, different other components. It is to be understood that such depicted architectures are merely examples, and that in fact many other architectures may be implemented which achieve the same functionality. In a conceptual sense, any arrangement of components to achieve the same functionality is effectively "associated" such that the desired functionality may be achieved. Hence, any two components herein combined to achieve a particular functionality may be seen as "associated with" each other such that the desired functionality is achieved, irrespective of architectures or intermediate components. Likewise, any two components so associated may also be viewed as being "operably connected", or "operably coupled", to each other to achieve the desired functionality, and any two components capable of being so associated may also be viewed as being "operably couplable" to each other to achieve the desired functionality. Specific examples of operably couplable include but are not limited to physically mateable and/or physically interacting components and/or wirelessly interactable and/or wirelessly interacting components and/or logically interacting and/or logically interactable components.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc. ). It will be further understood by those within the art that if a specific number of an introduced claim recitation is intended, such an intent will be explicitly recited in the claim, and in the absence of such recitation no such intent is present. For example, where only one item is intended, the term "single" or similar language may be used. As an aid to understanding, the following appended claims and/or the descriptions herein may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"). The same holds true for the use of definite articles used to introduce claim recitations. In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc. " is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc. ). In those instances where a convention analogous to "at least one of A, B, or C, etc. " is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc. ). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B. " Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Moreover, as used herein, the term "set" or "group" is intended to include any number of items, including zero. Additionally, as used herein, the term "number" is intended to include any number, including zero.

In addition, where features or aspects of the disclosure are described in terms of Markush groups, those skilled in the art will recognize that the disclosure is also thereby described in terms of any individual member or subgroup of members of the Markush group.

As will be understood by one skilled in the art, for any and all purposes, such as in terms of providing a written description, all ranges disclosed herein also encompass any and all possible subranges and combinations of subranges thereof. Any listed range can be easily recognized as sufficiently describing and enabling the same range being broken down into at least equal halves, thirds, quarters, fifths, tenths, etc. As a non-limiting example, each range discussed herein may be readily broken down into a lower third, middle third and upper third, etc. As will also be understood by one skilled in the art all language such as "up to," "at least," "greater than," "less than," and the like includes the number recited and refers to ranges which can be subsequently broken down into subranges as discussed above. Finally, as will be understood by one skilled in the art, a range includes each individual member. Thus, for example, a group having 1-3 cells refers to groups having 1, 2, or 3 cells. Similarly, a group having 1-5 cells refers to groups having 1, 2, 3, 4, or 5 cells, and so forth.

Moreover, the claims should not be read as limited to the provided order or elements unless stated to that effect. In addition, use of the terms "means for" in any claim is intended to invoke 35 U. S. C. §112, ¶ 6 or means-plus-function claim format, and any claim without the terms "means for" is not so intended.

Although the invention is illustrated and described herein with reference to specific embodiments, the invention is not intended to be limited to the details shown. Rather, various modifications may be made in the details within the scope and range of equivalents of the claims and without departing from the invention.

Throughout the disclosure, one of skill understands that certain representative embodiments may be used in the alternative or in combination with other representative embodiments.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer readable medium for execution by a computer or processor. Examples of non-transitory computer-readable storage media include, but are not limited to, a read only memory (ROM), random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a UE, WTRU, terminal, base station, RNC, or any host computer.

Moreover, in the embodiments described above, processing platforms, computing systems, controllers, and other devices containing processors are noted. These devices may contain at least one Central Processing Unit ("CPU") and memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed. "

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigure or otherwise alter the CPU's operation, as well as other processing of signals. The memory locations where data bits are maintained are physical locations that have particular electrical, magnetic, optical, or organic properties corresponding to or representative of the data bits.

The data bits may also be maintained on a computer readable medium including magnetic disks, optical disks, and any other volatile (e.g., Random Access Memory ("RAM")) or non-volatile ("e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system. It is understood that the representative embodiments are not limited to the above-mentioned memories and that other platforms and memories may support the described methods.

No element, act, or instruction used in the description of the present application should be construed as critical or essential to the invention unless explicitly described as such. In addition, as used herein, the article "a" is intended to include one or more items. Where only one item is intended, the term "one" or similar language is used. Further, the terms "any of" followed by a listing of a plurality of items and/or a plurality of categories of items, as used herein, are intended to include "any of," "any combination of," "any multiple of," and/or "any combination of multiples of" the items and/or the categories of items, individually or in conjunction with other items and/or other categories of items. Further, as used herein, the term "set" is intended to include any number of items, including zero. Further, as used herein, the term "number" is intended to include any number, including zero.

Moreover, the claims should not be read as limited to the described order or elements unless stated to that effect. In addition, use of the term "means" in any claim is intended to invoke 35 U. S. C. §112, ¶ 6, and any claim without the word "means" is not so intended.

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Application Specific Standard Products (ASSPs); Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, Mobility Management Entity (MME) or Evolved Packet Core (EPC), or any host computer. The WTRU may be used m conjunction with modules, implemented in hardware and/or software including a Software Defined Radio (SDR), and other components such as a camera, a video camera module, a videophone, a speakerphone, a vibration device, a speaker, a microphone, a television transceiver, a hands free headset, a keyboard, a Bluetooth^{®} module, a frequency modulated (FM) radio unit, a Near Field Communication (NFC) Module, a liquid crystal display (LCD) display unit, an organic light-emitting diode (OLED) display unit, a digital music player, a media player, a video game player module, an Internet browser, and/or any Wireless Local Area Network (WLAN) or Ultra Wide Band (UWB) module.

Although the invention has been described in terms of communication systems, it is contemplated that the systems may be implemented in software on microprocessors/general purpose computers (not shown). In certain embodiments, one or more of the functions of the various components may be implemented in software that controls a general-purpose computer.

In addition, although the invention is illustrated and described herein with reference to specific embodiments, the invention is not intended to be limited to the details shown. Rather, various modifications may be made in the details within the scope and range of equivalents of the claims and without departing from the invention.

## Claims

1. A method, implemented in a WTRU, comprising:
receiving, from a network, one or more first messages comprising:
first information indicating resources for a first positioning reference signal, PRS, transmissions from a set of transmission-reception points, TRPs;
second information indicating a first uncertainty threshold associated with a WTRU positioning uncertainty; and
recovery configuration information indicating one or more recovery configurations for enabling to recover from WTRU positioning failures conditions;
recurrently determining a WTRU positioning uncertainty using PRS transmissions from the first set of TRPs;
based on the recurrent determination of the WTRU positioning uncertainty, determining a trend to reach the uncertainty threshold; and
based on the determined trend, selecting at least one recovery configuration from the one or more recovery configurations.

2. The method of claim 1, wherein the one or more recovery configurations comprise any of: one or more positioning configurations, a recovery time duration, a recovery timer, and a recovery threshold value.

3. The method of claim 2 wherein the one or more positioning configurations comprises any of: a second PRS transmission from the set of TRPs, and a second uncertainty threshold associated with the WTRU positioning uncertainty.

4. The method of any of claim 2 and claim 3, wherein the recovery time duration comprises a maximum amount of time available for recovering from a positioning failure condition before transmitting, to the network, an alert message indicating at least of first determined WTRU positioning uncertainty of the recurrent determined WTRU positioning uncertainty not satisfying the uncertainty threshold.

5. The method of any of claim 2 to claim 4, comprising performing a recovery action from failure conditions before the expiry of the recovery timer.

6. The method of any of claim 2 to claim 5, comprising associating the recovery threshold value with the first uncertainty threshold.

7. The method of any of claim 1 to claim 6 comprising transmitting to the network a second message comprising third information indicating the trend to reach the uncertainty threshold.

8. The method of any of claim 1 to claim 7, wherein the trend to reach the uncertainty threshold is determined by determining at least a second determined WTRU positioning uncertainty of the recurrent determined WTRU positioning uncertainty not satisfying a given threshold.

9. A wireless transmit/receive unit, WTRU, comprising a processor, a transmitter, a receiver, and a memory, and configured to:
receive, from a network, one or more first messages comprising:
first information indicating resources for a first positioning reference signal, PRS, transmissions from a set of transmission-reception points, TRPs;
second information indicating a first uncertainty threshold associated with a WTRU positioning uncertainty; and
recovery configuration information indicating one or more recovery configurations for enabling to recover from WTRU positioning failures conditions;
recurrently determine a WTRU positioning uncertainty using PRS transmissions from the first set of TRPs;
based on the recurrent determination of the WTRU positioning uncertainty, determine a trend to reach the uncertainty threshold; and
based on the determined trend, selecting at least one recovery configuration from the one or more recovery configurations.

10. The WTRU of claim 9, wherein the one or more recovery configurations comprise any of: one or more positioning configurations, a recovery time duration, a recovery timer, and a recovery threshold value.

11. The WTRU of claim 10 wherein the one or more positioning configurations comprises any of: a second PRS transmission from the set of TRPs, and a second uncertainty threshold associated with the WTRU positioning uncertainty.

12. The WTRU of any of claim 10 and claim 11, wherein the recovery time duration comprises a maximum amount of time available for recovering from a positioning failure condition before transmitting, to the network, an alert message indicating at least of first determined WTRU positioning uncertainty of the recurrent determined WTRU positioning uncertainty not satisfying the uncertainty threshold.

13. The WTRU of any of claim 10 to claim 12, configured to perform a recovery action from failure conditions before the expiry of the recovery timer.

14. The WTRU of any of claim 10 to claim 13, configured to associate the recovery threshold value with the first uncertainty threshold.

15. The WTRU of any of claim 9 to claim 14 configured to transmit to the network a second message comprising third information indicating the trend to reach the uncertainty threshold.
